(19) Europäisches Patentamt
European Patent Office
Office européen des brevets

(11) **EP 0 905 807 B1**

(12) **EUROPEAN PATENT SPECIFICATION**

(45) Date of publication and mention
of the grant of the patent:
**19.12.2001 Bulletin 2001/51**

(51) Int Cl.[7]: **H01M 4/58**, H01G 9/04

(21) Application number: **98118316.3**

(22) Date of filing: **28.09.1998**

(54) **Nonaqueous secondary battery**

Nichtwässrige Sekundärbatterie

Pile secondaire à électrolyte non aqueux

(84) Designated Contracting States:
**DE**

(30) Priority: **26.09.1997 JP 26157797**
**28.08.1998 JP 24318298**

(43) Date of publication of application:
**31.03.1999 Bulletin 1999/13**

(60) Divisional application:
**01103576.3 / 1 119 064**

(73) Proprietor: **MITSUBISHI CHEMICAL
CORPORATION**
**Chiyoda-ku, Tokyo 100-0005 (JP)**

(72) Inventor: **Kamo, Takako,**
**c/o Mitsubishi Chemical Corp.**
**Inashiki-gun, Ibaraki 300-0332 (JP)**

(74) Representative: **HOFFMANN - EITLE**
**Patent- und Rechtsanwälte Arabellastrasse 4
81925 München (DE)**

(56) References cited:
**EP-A- 0 284 104     FR-A- 2 493 607
US-A- 4 452 777     US-A- 4 983 476
US-A- 5 041 199     US-A- 5 154 990
US-A- 5 262 255**

- **PATENT ABSTRACTS OF JAPAN vol. 010, no.
  279 (E-439), 20 September 1986 & JP 61 099279
  A (DOUDENSEI MUKI KAGOUBUTSU GIJUTSU
  KENKYU KUMIAI), 17 May 1986**
- **PATENT ABSTRACTS OF JAPAN vol. 009, no.
  126 (E-318), 31 May 1985 & JP 60 012678 A
  (MATSUSHITA DENKI SANGYO KK), 23 January
  1985**

## EP 0 905 807 B1

**Description**

BACKGROUND OF THE INVENTION

1. Field of the Invention

This invention relates to a nonaqueous secondary battery. More specifically, the invention relates to a nonaqueous secondary battery in which an active material of a negative electrode is a material capable of occluding and liberating alkali metal ions or alkaline earth metal ions. The invention relates, in particular, to a novel secondary battery which shows a high voltage, a high energy density, and excellent charging and discharging characteristics, and also has a long cycle life and high reliability.

2. Related Art

Nonaqueous secondary batteries come in several types, of which a typical one is a lithium ion secondary battery using a material capable of occluding and liberating lithium ions for a negative electrode and a positive electrode. In recent years, with marked progress of portable electronic equipment and communication instruments, a secondary battery which can be recharged and discharged and which has a high energy density has been desired, from the viewpoints of cost effectiveness and compact, lightweight equipment. When metallic lithium is used alone as an active material of the negative electrode of this type of battery, the electric potential has the largest negative value. Thus, the output voltage and energy density of a battery formed from it become the highest. However, as the battery is charged and discharged, dendrites of lithium form on the negative electrode. This posed the problem of considerable deterioration due to charges and discharges, making the cycle life short, and the problem of a high risk of an internal short circuit. To solve these problems, many examples of using alloys of lithium and other metals, such as aluminum, as active materials of a negative electrode have been reported, but they were unsuccessful in dispelling concern about the internal short circuit due to the lithium dendrites. Afterwards, alternative materials with the ability to occlude and emit lithium were developed. As a result, carbon materials were discovered, and put into practical use. Carbon materials, however, have limits in energy density.

Various active materials of a negative electrode have been proposed as high energy density materials. Among them are sulfides. Japanese Unexamined Patent Publication No. 07-235295, for example, proposes active materials of a negative electrode containing at least one of oxides or sulfides of the atoms of groups 14 and 15 of the periodic table, In, Zn or Mg. Japanese Unexamined Patent Publication No. 07-288123 puts forth mainly amorphous oxides and chalcogen compounds containing two or more atoms selected from the atoms of groups 13 to 15. Japanese Unexamined Patent Publication No. 8-203526 proposes mainly amorphous chalcogen compounds and oxides containing three or more atoms selected from the atoms of groups 2, 13, 14 and 15.

U.S. Patent No. 4,009,052 proposes sulfides of Ti, V, Zr, Nb, Hf and Ta, U.S. Patent No. 4,299,892 sulfides of Ti, V, Zr, Nb, Hf, Ta, Mo and W, and U.S. Patent No. 4,983,476 sulfides of transition metals (Ti, V, Cd, Nb, Cr, Mo, W, Fe, Ni). Electrochim. Acta (1991), 36 (5-6), 935P proposes a sulfide of Nb. However, none of these sulfides contain Cu, Ag or Au.

As sulfides containing Cu, Ag or Au, U.S. Patent No. 4,115,633 proposes materials containing (Ag, Li or Cu) and (Ga or In) and sulfur. U.S. Patent No. 4,751,159 recommends $AgMo_6S_8$.

Phys. Scr., T (1991), T39 (Proc. Gem. Conf. Condens. Matter Div. Eur. Phys. Soc., 11th, 1991), 9-20 proposes examples of using phosphorus-containing layered compounds expressed by $MPX_3$ (M = V, Mn, Fe, Co, Ni, Zn; X = S, Se) for solid batteries. Deutsche Offenlegungschrift 286,465 proposes $M_{0.55-1}TiS_2$ (M: Co, Ni, Cu, Ag, Zn, Cd).

However, these sulfides containing Cu or Ag are still unsatisfactory in terms of electrical potential and capacity, and the development of materials exhibiting even better performance is longed for.

Proposals are also made that sulfides be used for positive electrodes rather than for negative electrodes of battery systems.

For instance, as a material for a positive electrode of a battery system having metallic Li as a negative electrode, European Patent Publication No. 178,396 proposes $M_aFe_bS_2$ (M = Co, Ni, Sn, Pb, Mn, Zn, Cd, Hg and/or Ag), while Mater. Res. Bull. (1988), 23(9), 1261-71 proposes $MoS_2$ or $FeS_2$.

As a material for a positive electrode of a battery system whose negative electrode is composed of a light metal, Deutsche Offenlegungschrift 233,893 proposes $M_xMo_6S_8$ (M is one or more element selected from Cu, Zn, Ni, Co, Fe, Ag and Pb).

However, these materials are originally intended for use in a positive electrode, and are not entirely satisfactory in terms of electric potential and capacity.

US-5,154,990 relates to rechargeable solid state lithium ion batteries including a transition metal chalcogenide as the anode, a lithiated transition metal oxide as the cathode, and a lithium ion conducting solid as the electrolyte.

The anode material may be selected from CuS.

JP-A-61 099 279 teaches using a mixture of Cu and $Cu_2S$ as active material for a negative electrode in a solid electrolyte secondary battery.

SUMMARY OF THE INVENTION

The present invention aims at solving the problems with the above-described earlier technologies. In other words, it is an object of the invention to provide a nonaqueous secondary battery which has a high voltage and a high energy density, and which produces few dendrites of lithium when the battery is repeatedly charged and discharged. It is another object of the invention to find out an excellent negative electrode material based on a study of compounds whose use as active materials of a negative electrode has not been investigated among sulfides containing Cu, Ag or Au. It is still another object of the invention to provide an energy storage device, including an electrical energy storage device comprising an electrode material for an excellent electrochemical capacitor.

The inventors of the present invention have conducted extensive studies to attain the above-mentioned objects. Based on the studies, the use of a specific sulfides containing Ag or Au or Cu, Ag or Au, as an active material of a negative electrode has been found to give a low potential and a high capacity. This finding has led to this invention.

That is, the invention provides a nonaqueous secondary battery having a compound of the general formula (1):

$$A_aS \quad\quad\quad (1)$$

where A is Ag or Au, and $0.4 \leq a \leq 5$,
as an active material of a negative electrode.

The invention also provides a nonaqueous secondary battery having a compound of the general formula (2):

$$B_bD_{(1-b)}S_y \quad\quad\quad (2)$$

where B and D are different from each other, and are each selected from the group consisting of Cu, Ag, Au, Zn, Al, W and Li, $0.001 \leq b < 0.999$, and $0 < y < 2$,
as an active material of a negative electrode.

The invention further provides a nonaqueous secondary battery having a compound of the general formula (3):

$$E_eG_gJ_{(1-e-g)}M_mS_z \quad\quad\quad (3)$$

where E, G and J are different from each other, and are each selected from the group consisting of Cu, Ag, Au, Zn, Al, W, Li and Mg, M is Ca, Sr, Na, K, Rb, O, F, Cl, Br or I, $0.001 < e < 0.999$, $0.001 < g < 0.999$, $0 \leq m \leq 0.2$, $0 < z < 2(1+m)$,
as an active material of a negative electrode.

Of the active materials of a negative electrode enumerated above, the preferred compounds are those of the general formula (1) in which A is Ag, those of the general formula (2) in which B is Ag, and those of the general formula (3) in which E is Ag.

Besides, the invention provides an energy storage device having a compound of any of the general formulae (1) to (3) as an active material of a negative electrode. In addition, the invention provides an electric energy storage device having a compound of any of the general formulae (1) to (3) as an electrode material for an electrochemical capacitor.

BRIEF DESCRIPTION OF THE DRAWINGS

Fig. 1 is a structural example of a nonaqueous secondary battery of the present invention, in which 1 denotes a negative electrode case, 2 denotes a negative electrode, 3 denotes a gasket, 4 denotes a counter electrode, 5 denotes a counter electrode case, and 6 denotes a separator;
Fig. 2 is a charge-discharge characteristics view of a nonaqueous secondary battery of Example 1; and
Fig. 3 is a charge-discharge characteristics view of a nonaqueous secondary battery of Comparative Example 1.

PREFERRED EMBODIMENTS OF THE INVENTION

The present invention is characterized by using a sulfide of any of the general formulae (1) to (3) as an active material of a negative electrode of a nonaqueous secondary battery, or as an electrode material for an electrochemical capacitor of an electric energy storage device.

The general formula (1) represents a two-element system sulfide containing Ag or Au. The element A in the general formula (1) is selected from Ag and Au, but preferably Ag. The range for the number a in the general formula (1) is $0.4 \leq a \leq 5$, but preferably $0.6 \leq a \leq 2$.

Examples of the compound expressed by the general formula (1) are $Ag_2S$, $3Ag_2S \cdot Ag_2S_3$, AuS, and $AuS_2$.

The general formula (2) represents a three-element system sulfide. The elements B and D in the general formula (2) are selected, dependently of each other, from the group consisting of Cu, Ag, Au, Zn, Al, W and Li. At least one of the elements B and D is preferably any of Cu, Ag and Au, more preferably either Cu or Ag, and most preferably Ag. The range for the number b in the general formula (2) is $0.001 \leq b \leq 0.999$, and a suitable value may be selected for the number b so that the targeted effects of the present invention can be exhibited. The range for the number y is $0 < y < 2$, and preferably $0 < y < 1$.

Examples of the compound expressed by the general formula (2) include $Ag_{0.09}Zn_{0.91}S_{0.95}$, $Ag_{0.5}Zn_{0.5}S_{0.75}$, $Ag_{0.9}Al_{0.1}S_{0.6}$, $Zn_{0.91}Cu_{0.09}S_{0.955}$, $Ag_{0.9}Zn_{0.1}S_{0.55}$, $Li_{0.5}Ag_{0.5}S_{0.25}$, $Li_{0.5}Au_{0.5}S_{0.25}$, $Li_{0.5}Cu_{0.5}S_{0.25}$, and $Li_{0.67}Cu_{0.33}S_{0.67}$.

The general formula (3) represents a four- or five-element system sulfide. The elements E, G and J in the general formula (3) are selected, dependently of each other, from the group consisting of Cu, Ag, Au, Zn, Al, W, Li and Mg. Preferably, E, G and J contain at least one of Cu, Ag and Au, more preferably at least one of Cu and Ag, and most preferably Ag. The ranges for the numbers e and g in the general formula (3) are $0.001 < e < 0.999$ and $0.001 < g < 0.999$. Suitable values may be selected for the numbers e and g so that the targeted effects of the present invention can be exhibited.

The element M in the general formula (3) is Ca, Sr, Na, K, Rb, O, F, Cl, Br or I, preferably Sr, O, F or Cl, and more preferably O or Cl. The range for the number m is $0 \leq m \leq 0.2$. When m = 0, the sulfide of the general formula (3) is a four-element system sulfide consisting of E, G, J and S. The range for the number z in the general formula (3) is $0 < z < 2(1+m)$. The preferred range for z is $0 < z < 1.5(1+m)$, particularly preferably $0.2(1+m) < z < (1+m)$.

Examples of the compound expressed by the general formula (3) include $Ag_{0.09}Zn_{0.901}Mg_{0.009}S_{0.94}$, $Ag_{0.083}Zn_{0.834}Mg_{0.083}S_{0.92}$, $Ag_{0.901}Al_{0.09}Mg_{0.009}S_{0.5945}$, $Ag_{0.834}Al_{0.083}Mg_{0.083}S_{0.6245}$, $Ag_{0.901}Al_{0.09}Mg_{0.009}S_{0.5945}O_{0.2}$, $Ag_{0.901}Al_{0.09}Mg_{0.009}S_{0.5945}Cl_{0.2}$, $Ag_{0.09}Zn_{0.901}Mg_{0.009}S_{0.94}O_{0.2}$, and $Ag_{0.09}Zn_{0.901}Mg_{0.009}S_{0.94}Cl_{0.2}$.

The methods for producing the compounds of the general formulae (1) to (3) are not restricted. Thus, commercially available products, if any, such as silver sulfide, may be used. Alternatively, these compounds may be prepared by the use of any methods known to people skilled in the art.

A concrete example of the method for producing the compounds of the general formulae (1) to (3) comprises introducing hydrogen sulfide or the like into a solution containing the metallic elements constituting the desired compounds, drying the resulting precipitate, with heating, in an inert gas atmosphere, a reducing gas atmosphere or in vacuum, and if desired, sintering the particles. The three-, four- or five-element system sulfide of the general formula (2) or (3) may also be prepared by mixing plural types of sulfides, and burning the mixture. For example, a three-element system sulfide containing Au and Zn can be prepared by burning a mixture of silver sulfide and zinc sulfide.

The state of the compounds of the general formulae (1) to (3) is not restricted. These compounds may have a crystal structure, or may be in an amorphous state. Alternatively, the compounds prepared by the above-described method may be used, unchanged, as active materials of a negative electrode, or may be used as active materials of a negative electrode after being processed, if desired. The processing can be performed by suitably combining shredding, grinding, granulation and molding. The particle diameter is not restricted, but generally, the mean particle diameter falls within the range of from 0.01 to 50 µm, preferably from 0.1 to 50 µm. The particle size distribution is also preferably within this range.

Furthermore, the above compound may be subjected to an electrochemical reaction with lithium or a lithium-containing substance to occlude lithium ions into the compound, which is thereby converted to a lithium-containing material and may be used as an active material of a negative electrode.

Any of the thus prepared active materials of a negative electrode is used to produce an electrode for the nonaqueous secondary battery or the energy storage device of the present invention. There is no restriction on the method of producing the electrode. For example, the electrode can be produced by adding a binder, a solvent, etc. to the active material of a negative electrode to form it into a slurry, applying the slurry to a substrate of a current collector such as a copper foil, and drying it. Also, the electrode material can be shaped, unchanged, into the form of an electrode by a method such as roll forming or compression molding.

The binder used in the production of the electrode is not restricted in type, if it is a material stable to the solvent used during electrode production or to the electrolyte. Examples of the binder are resinous polymers such as polyethylene, polypropylene, polyethylene terephthalate, aromatic polyamide, and cellulose; rubbery polymers such as styrene-butadiene rubber, isoprene rubber, butadiene rubber, and ethylene-propylene rubber; thermoplastic elastomeric polymers such as styrene-butadiene-styrene block copolymer and its hydrogenation product, styrene-ethylene-butadiene-styrene block copolymer and its hydrogenation product, and styrene-isoprene-styrene block copolymer and its hydrogenation product; flexible resinous polymers such as syndiotactic 1,2-polybutadiene, ethylene-vinyl acetate copolymer, and propylene-$\alpha$-olefin (carbon number 2 to 12) copolymer; and fluorocarbon polymers such as polyvinylidene fluoride, and polytetrafluoroethylene, and polytetrafluoroethylene-ethylene copolymer.

As the binder, there can be used a polymer composition having alkali metal ion (lithium ion, in particular) conductivity. As such ion conductive polymer compositions, there may be used systems comprising composites of polyether type polymeric compounds, such as polyethylene oxide or polypropylene oxide, crosslinked polymeric compounds of polyether, or polymeric compounds such as polyepichlorohydrin, polyphosphazene, polysiloxane, polyvinyl pyrrolidone, polyvinylidene carbonate, or polyacrylonitrile, and lithium salts or alkali metal salts consisting essentially of lithium, or systems comprising these polymeric compounds mixed with organic compounds having a high dielectric constant, such as propylene carbonate, ethylene carbonate, or $\gamma$-butyrolactone. These materials may be used in combination.

The active material of a negative electrode and the binder may be mixed in various manners. For example, particles of both of them are mixed, or particles of the active material of a negative electrode are entangled with a fibrous binder to form a mixture, or a layer of the binder is deposited on the surface of particles of the active material of a negative electrode. The mixture ratio of the binder to the powder of the active material of a negative electrode is preferably 0.1 to 30% by weight, and more preferably 0.5 to 10% by weight, based on the active material of a negative electrode. If the binder is added in an amount exceeding 30% by weight, the internal resistance of the electrode tends to increase. With the binder in an amount of less than 0.1% by weight, on the other hand, the binding between the current collector and the active material of a negative electrode tends to decrease.

In mixing the active material of a negative electrode and the binder, a conductive material may be mixed jointly. Since the conductive material used is not restricted in type, it may be a metal or a nonmetal. Examples of a metallic conductive material are materials composed of metallic elements such as Cu or Ni. Examples of a nonmetallic conductive material are carbon materials such as graphite, carbon black, acetylene black, and Ketjen black. The mean particle diameter of the conductive material is preferably 1 $\mu$m or less.

The mixture ratio of the conductive material is preferably 0.1 to 30% by weight, more preferably 0.5 to 15% by weight, based on the active material of a negative electrode. By setting the mixture ratio of the conductive material at 30% by weight or less, the charge and discharge capacity of the electrode per unit volume can be made relatively high. When the mixture ratio of the conductive material is set at 0.1% by weight or more, a conduction path attributed to the conductive material can be fully formed within the electrode.

The above-mentioned mixture containing at least the active material of a negative electrode and the binder may be applied onto the current collector in accordance with the purpose of use of the electrode. The shape of the current collector to which the mixture is applied is not restricted, but can be determined depending on the mode of use of the negative electrode, etc. For instance, a cylindrical, plate-like, or coiled current collector may be used. The material for the current collector may be a metal or carbon.

The application of the mixture to the current collector can be performed by means known among people skilled in the art. When the mixture is a slurry, it can be applied onto the current collector by means of a dye coater or a doctor blade. The mixture in a pasty form can be applied onto the current collector by roller coating or the like. The mixture containing a solvent is dried to remove the solvent, whereby an electrode can be prepared.

The so produced electrode can be used for a nonaqueous secondary battery or an energy storage device.

The structure of and the manufacturing method for a nonaqueous secondary battery having this electrode as a negative electrode are not restricted, and can be selected suitably from among usually employed modes. The nonaqueous secondary battery includes at least a positive electrode, a negative electrode and an electrolyte as constituents, and if desired, may further include a separator, a gasket, a sealing plate, and a cell case. A manufacturing method comprises, for example, placing the electrode of the present invention on a cell floor plate, providing an electrolytic solution and a separator thereon, placing a positive electrode so as to be opposed to the negative electrode, and crimping these materials together with a gasket and a sealing plate, to form a secondary battery. The shape of the secondary battery is not restricted, and may be tubular, prismatic or coin-shaped. Thus, the secondary battery may take, say, a structure in which a band-shaped positive electrode and a band-shaped negative electrode are wound in a spiral form via the separator, or a structure in which a negative electrode and a positive electrode are laminated via the separator.

The positive electrode material used in the nonaqueous secondary battery of the present invention is not restricted, and can be selected suitably from known positive electrode materials for a secondary battery. Its examples are $LiFeO_2$, $LiCoO_2$, $LiNiO_2$, $LiMn_2O_4$, and their nonstoichiometric compounds, $MnO_2$, $TiS_2$, $FeS_2$, $Nb_3S_4$, $Mo_3S_4$, $CoS_2$, $V_2O_5$, $P_2O_5$, $CrO_3$, $V_3O_3$, $TeO_2$ and $GeO_2$.

The electrolytic solution used in the nonaqueous secondary battery is not restricted so long as it is an electrolyte dissolved in an organic solvent. Any known electrolytic solution can be used. Examples of the organic solvent are esters such as propylene carbonate, ethylene carbonate, and γ-butyrolactone; ethers such as diethyl ether, tetrahydrofuran, substituted tetrahydrofuran, dioxolane, pyran and its derivatives, dimethoxyethane, and diethoxyethane; 3-substituted-2-oxazolidinones such as 3-methyl-2-oxazolidinone; and sulfolane, methylsulfolane, acetonitrile, and propionitrile. These organic solvents can be used alone or as a mixture of two or more.

An electrolyte constituting the nonaqueous electrolytic solution is preferably selected from compounds which are ionically dissociated at a high dissociation rate in the solvent used. Examples of the electrolyte are $LiClO_4$, $LiPF_6$, $LiBF_4$, $LiCF_3SO_3$, $LiAsF_6$, $LiSbF_6$, $LiCl$, $LiBr$, $Li(CF_3SO_2)_2N$, $LiC_4F_9SO_3$, $CF_3COOLi$, and $LiAlCl_3$. Only one of the electrolytes may be used alone, or two or more of them may be used in combination. The concentration of the electrolyte is preferably about 0.5 to 2.0 M.

The nonaqueous secondary battery of the present invention may use a solid electrolyte which is a conductor of alkali metal ions such as lithium ions. For example, a polymeric solid electrolyte such as lithium perchlorate-polyethylene oxide, or an inorganic solid electrolyte such as $Li_2S$-$SiS_2$ can be used.

The separator constituting the secondary battery of the present invention serves to separate the negative electrode and the positive electrode so as to avoid their physical contact. The preferred separator has high ion permeability and a low electrical resistance. The separator is preferably selected from materials which are stable to the electrolytic solution and which have excellent liquid holding properties. Its examples are nonwoven fabrics or porous films of polyolefin resins, and these materials can be impregnated with the electrolytic solution.

The nonaqueous secondary battery having the active material of a negative electrode of any of the general formulae (1) to (3) as the negative electrode has a high voltage and a high energy density, and develops few dendrites of lithium when its charging and discharging are repeated. This battery is also characterized by showing a low potential and a high capacity, and having a very high volumetric capacity. These characteristics are outstanding even compared with known sulfide electrodes, $AgMo_6S_8$ and $TiS_2$. Thus, the effects of the present invention are remarkable.

For the foregoing reasons, the nonaqueous secondary battery of the present invention can be expected to find effective use in various applications, and its industrial utility is high. This secondary battery is particularly useful in fields requiring a compact, lightweight structure, such as portable electronic communication instruments, including compact video cameras, notebook computers, and cellular phones, and power sources of electric vehicles.

The nonaqueous secondary battery of the present invention is also usable effectively as means of energy storage. For example, it can be used effectively for storage of surplus electric power resulting at nighttime and on weekends, and for storage of intermittently produced energies such as solar-electric power generation energy and wind power generation energy. When the compound of any of the general formulae (1) to (3) is used as an electrode material for an electrochemical capacitor, it can be utilized for an electric energy storage device.

The present invention will be described in further detail with reference to Examples and Comparative Examples. The materials, amounts of use, proportions, and procedure shown below may be changed, where necessary, unless they depart from the spirit of the invention. Thus, the scope of the invention is not restricted to the examples described below.

<Example 1>

$Ag_2S$ with a purity of 99.9% (Wako Pure Chemical Industries, Ltd.) as an active material of a negative electrode was crushed and granulated to particle diameters of 10 μm or less by means of an automatic mortar. Graphite as a conductive material and Teflon as a binder were mixed with the resulting particles to form a composition of a negative electrode. The mixture ratio was $Ag_2S$:graphite:Teflon = 80:12:8 (weight ratio). This composition of a negative electrode was molded into a pellet with a diameter of 10 mm and a thickness of 0.5 mm at a pressure of 3 tons/cm². Then, the pellet was dried for 24 hours in a vacuum dryer at 110°C to produce a negative electrode.

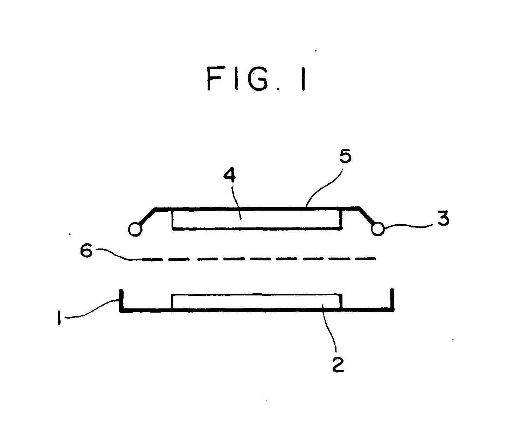

To evaluate the performance of the resulting negative electrode, a coin-shaped cell as shown in Fig. 1 was prepared. In Fig. 1, the numeral 1 denotes a case which concurrently serves as a negative electrode terminal. This case was formed by deep drawing of a stainless steel plate with an Ni-plated external surface. The numeral 2 denotes the above-mentioned negative electrode, which was bonded and electrically connected to the negative electrode case 1. The numeral 5 denotes a counter electrode case of stainless steel with an Ni-plated external surface. This case 5 concurrently serves as a counter electrode terminal. The numeral 4 denotes a lithium metal foil used as a counter electrode, which was bonded and electrically connected to the counter electrode case 5. The numeral 3 denotes a gasket consisting essentially of polypropylene. The gasket 3 was interposed between the negative electrode case 1 and the counter electrode case 5 to maintain electrical insulation between the negative electrode and the lithium counter electrode. At the same time, the opening edge of the counter electrode case was bent inward and crimped to seal in the contents of the battery. The numeral 6 denotes a separator comprising a porous film of polypropylene, which was immersed in an electrolytic solution. The electrolytic solution was a solution of lithium perchlorate dissolved at a rate of 1.0 mol/L in a solvent mixture (volume ratio 1:1) of ethylene carbonate and diethyl carbonate. The size of the battery was 20 mm in outer diameter and 2.5 mm in thickness.

The so prepared coin-shaped cell was subjected to the following charge/discharge test: Charging was performed at a current density of 0.16 mA/cm$^2$ until an interelectrode potential difference of 0 V was reached. Then, discharging was performed at a current density of 0.32 mA/cm$^2$ until an interelectrode potential difference of 1.5 V was reached. Under these conditions, cycles of charging and discharging were performed. The service capacity during the second cycle was measured, and recorded as capacity (mAh) per gram of the active material of a negative electrode and capacity (mAh) per cc of the active material of a negative electrode. The mean potential was also recorded.

<Comparative Example 1>

As a control, a coin-shaped cell was prepared in the same manner as in Example 1 except that graphite was used in place of Ag$_2$S as an active material of a negative electrode. A charge/discharge test of the cell was conducted in the same way as in Example 1.

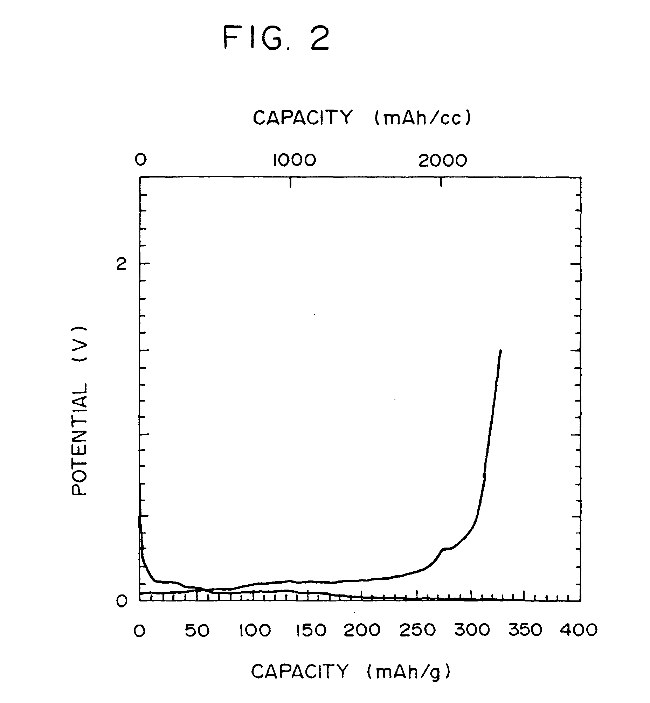

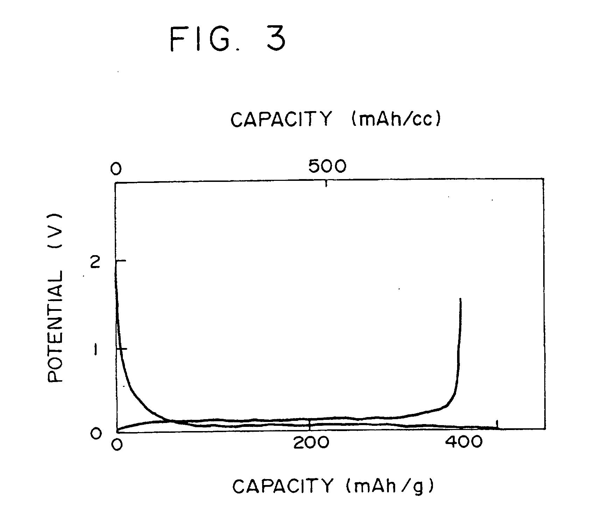

The results of the charge/discharge tests in Example 1 and Comparative Example 1 are shown in Table 1. The charge/discharge characteristics during the second cycle are given as Figs. 2 and 3.

Table 1

|  | Active material of a negative electrode | Mean potential (v) | Capacity | |
|---|---|---|---|---|
|  |  |  | (mAh/g) | (mAh/cc) |
| Example 1 | Ag$_2$S | 0.26 | 330 | 2416 |
| Comparative Example 1 | Graphite | 0.17 | 365 | 825 |

<Example 2>

112 g of a silver sulfide powder (Wako Pure Chemical Industries, Ltd.) and 9.7 g of zinc sulfide with a purity of 99.9% (Soekawa Chemical Co., Ltd.) were crushed on an agate mortar, and burned at 830°C in nitrogen to obtain a composite sulfide Ag$_{0.09}$Zn$_{0.91}$S$_{0.95}$ as an active material of a negative electrode. This composite sulfide was ground on a mortar, and then sifted to obtain particles 10 μm or less in diameter. To the particles, a powdery mixture (ratio 2: 1) of graphite and carbon black as a conductive material was added, followed by mixing. Then, Teflon as a binder was further added, followed by mixing, to prepare a composition of a negative electrode. Its mixture ratio was Ag$_{0.09}$Zn$_{0.91}$S$_{0.95}$ : conductive material:Teflon = 80:12:8 (weight ratio). This composition of a negative electrode was molded into a pellet with a diameter of 10 mm and a thickness of 0.5 mm at a pressure of 3 tons/cm$^2$. Then, the pellet was dried for 24 hours in a vacuum dryer at 110°C to produce a negative electrode.

To evaluate the performance of the resulting negative electrode, a coin-shaped cell as shown in Fig. 1 was prepared in the same manner as in Example 1. However, the electrolytic solution used was a solution of lithium hexafluoride dissolved at a rate of 1.0 mol/L in a solvent mixture (volume ratio 1:3) of ethylene carbonate and diethyl carbonate.

A charge/discharge test of the so prepared coin-shaped cell was conducted in the same manner as in Example 1 to measure its mean potential and capacity.

<Example 3>

A coin-shaped cell was produced in the same manner as in Example 2, except that Ag$_{0.5}$Zn$_{0.5}$S$_{0.75}$ prepared by crushing a silver sulfide powder and zinc sulfide at a varied mixture ratio, and burning the crushed mixture at 800°C in nitrogen was used as an active material of a negative electrode instead of the composite sulfide used in Example 2. A charge/discharge test of the resulting coin-shaped cell was conducted in the same manner as in Example 1.

<Example 4>

A coin-shaped cell was produced in the same manner as in Example 2, except that Ag$_{0.09}$Zn$_{0.901}$Mg$_{0.009}$S$_{0.94}$ prepared by crushing 6.2 g of a silver sulfide powder (Wako Pure Chemical Industries, Ltd.), 48.7 g of zinc sulfide with a purity of 99.9% (Soekawa Chemical Co., Ltd.) and 0.6 g of MgO with a purity of 99.9% (Wako Pure Chemical Industries, Ltd.) on an agate mortar, and burning the crushed mixture at 830°C in nitrogen was used as an active material of a negative electrode. A charge/discharge test of the resulting coin-shaped cell was conducted in the same manner as in Example 1.

<Example 5>

A coin-shaped cell was produced in the same manner as in Example 2, except that $Ag_{0.083}Zn_{0.834}Mg_{0.083}S_{0.92}$ prepared from the silver sulfide powder, zinc sulfide and MgO used in Example 4 but at a varied mixture ratio was used as an active material of a negative electrode. A charge/discharge test of the resulting coin-shaped cell was conducted in the same manner as in Example 1.

<Example 6>

74.3 g of a silver sulfide powder (Wako Pure Chemical Industries, Ltd.) and 5 g of aluminum sulfide with a purity of 99.9% (Soekawa Chemical Co., Ltd.) were crushed on an agate mortar, and burned at 700°C in argon to obtain $Ag_{0.9}Al_{0.1}S_{0.6}$. The resulting material was used as an active material of a negative electrode, and a coin-shaped cell was produced in the same manner as in Example 2. A charge/discharge test of the coin-shaped cell was conducted in the same manner as in Example 1.

<Example 7>

9.74 g of a zinc sulfide powder with a purity of 99.9% (Soekawa Chemical Co., Ltd.) and 0.8 g of copper sulfide with a purity of 99.9% (Kojundo Chemical Laboratory Co., Ltd) were crushed on an agate mortar, and burned at 250°C in nitrogen to obtain $Zn_{0.91}Cu_{0.09}S_{0.955}$. The resulting material was used as an active material of a negative electrode, and a coin-shaped cell was produced in the same manner as in Example 2. A charge/discharge test of the coin-shaped cell was conducted in the same manner as in Example 1.

<Example 8>

A coin-shaped cell was produced in the same manner as in Example 2 by the use of $Ag_2S$ as an active material of a negative electrode. A charge/discharge test of the coin-shaped cell was conducted in the same manner as in Example 1.

<Comparative Example 2>

For the purpose of comparison, a coin-shaped cell was produced in the same manner as in Example 2 by the use of a 2:1 powdery mixture of graphite and carbon black as an active material of a negative electrode. A charge/discharge test of the coin-shaped cell was conducted in the same manner as in Example 1.

<Comparative Example 3>

For the purpose of comparison, a coin-shaped cell was produced in the same manner as in Example 2 by the use of graphite as an active material of a negative electrode. A charge/discharge test of the coin-shaped cell was conducted in the same manner as in Example 1.

The results of the charge/discharge tests of Examples 2 to 7 and Comparative Examples 2 to 3 are shown in Table 2.

Table 2

|  | Active material of a negative electrode | Mean potential (v) | Capacity | |
|---|---|---|---|---|
|  |  |  | (mAh/g) | (mAh/cc) |
| Ex. 2 | $Ag_{0.09}Zn_{0.91}S_{0.95}$ | 0.60 | 366 | 1607 |
| Ex. 3 | $Ag_{0.5}Zn_{0.5}S_{0.75}$ | 0.40 | 339 | 1936 |
| Ex. 4 | $Ag_{0.09}Zn_{0.901}Mg_{0.009}S_{0.94}$ | 0.52 | 387 | 1695 |
| Ex. 5 | $Ag_{0.083}Zn_{0.834}Mg_{0.083}S_{0.92}$ | 0.53 | 348 | 1483 |
| Ex. 6 | $Ag_{0.9}Al_{0.1}S_{0.6}$ | 0.27 | 345 | 2343 |
| Ex. 7 | $Zn_{0.91}Cu_{0.09}S_{0.955}$ | 0.70 | 280 | 1190 |

Table 2   (continued)

|  | Active material of a negative electrode | Mean potential (v) | Capacity | |
|---|---|---|---|---|
|  |  |  | (mAh/g) | (mAh/cc) |
| Ex. 8 | $Ag_2S$ | 0.26 | 248 | 1815 |
| Comp. Ex. 2 | Graphite-carbon black (2:1) | 0.17 | 260 | 564 |
| Comp. Ex. 3 | Graphite | 0.17 | 360 | 814 |

The nonaqueous secondary battery of the present invention shows a low potential and a higher capacity than in the Comparative Examples. The nonaqueous secondary battery of the invention is particularly characterized by an extremely high volume capacity. Therefore, if the active material of a negative electrode of the present invention is combined with a positive electrode of a material, such as $LiCoO_4$ or $LiMnO_4$, to produce the nonaqueous secondary battery of the invention, this nonaqueous secondary battery can be expected to achieve a high capacity in the 4 V range.

**Claims**

1.   A nonaqueous secondary battery comprising a compound of the general formula (1):

$$A_aS \qquad (1)$$

where A is Ag or Au, and $0.4 \leq a \leq 5$,
as an active material of a negative electrode.

2.   The nonaqueous secondary battery of claim 1, wherein the element A of the compound is Ag.

3.   The nonaqueous secondary battery of claim 1, wherein the element A of the compound is Au.

4.   The nonaqueous secondary battery of claim 1, wherein the compound is selected from the group consisting of $Ag_2S$, $3Ag_2S \cdot Ag_2S_3$, $AuS$, and $AuS_2$.

5.   The nonaqueous secondary battery of any one of claims 1-4, wherein the number a of the compound is $0.6 \leq a \leq 2$.

6.   A nonaqueous secondary battery comprising a compound of the general formula (2):

$$B_bD_{(1-b)}S_y \qquad (2)$$

where B and D are different from each other, and are each selected from the group consisting of Cu, Ag, Au, Zn, Al, W and Li, $0.001 \leq b \leq 0.999$, and $0 < y < 2$,
as an active material of a negative electrode.

7.   The nonaqueous secondary battery of claim 6, wherein at least one of the elements B and D of the compound is Cu, Ag or Au.

8.   The nonaqueous secondary battery of claim 7, wherein the element B or D of the compound is Ag.

9.   The nonaqueous secondary battery of any one of claims 6-8, wherein the number y of the compound is $0 < y < 1$.

10.   The nonaqueous secondary battery of claim 6, wherein the compound is selected from the group consisting of $Ag_{0.09}Zn_{0.91}S_{0.95}$, $Ag_{0.5}Zn_{0.5}S_{0.75}$, $Ag_{0.9}Al_{0.1}S_{0.6}$, $Zn_{0.91}Cu_{0.09}S_{0.955}$, $Ag_{0.9}Zn_{0.1}S_{0.55}$, $Li_{0.5}Ag_{0.5}S_{0.25}$, $Li_{0.5}Au_{0.5}S_{0.25}$, $Li_{0.5}Cu_{0.5}S_{0.25}$, and $Li_{0.67}Cu_{0.33}S_{0.67}$.

11.   A nonaqueous secondary battery comprising a compound of the general formula (3):

$$E_e G_g J_{(1-e-g)} M_m S_z \qquad (3)$$

where E, G and J are different from each other, and are each selected from the group consisting of Cu, Ag, Au, Zn, Al, W, Li and Mg, M is Ca, Sr, Na, K, Rb, O, F, Cl, Br or I, $0.001 < e < 0.999$, $0.001 < g < 0.999$, $0 \leq m \leq 0.2$, $0 < z < 2(1+m)$,

as an active material of a negative electrode.

12. The nonaqueous secondary battery of claim 11, wherein at least one of the elements E, G and J of the compound is Cu, Ag or Au.

13. The nonaqueous secondary battery of claim 12, wherein the element E, G or J of the compound is Ag.

14. The nonaqueous secondary battery of any one of claims 11-13, wherein the element M of the compound is Sr, O, F or Cl.

15. The nonaqueous secondary battery of claim 14, wherein the element M of the compound is O or Cl.

16. The nonaqueous secondary battery of any one of claims 11-15, wherein the number z of the compound is $0 < z < 1.5(1+m)$.

17. The nonaqueous secondary battery of claim 16, wherein the number z of the compound is $0.2(1+m) < z < (1+m)$.

18. The nonaqueous secondary battery of claim 11, wherein the compound is selected from the group consisting of $Ag_{0.09}Zn_{0.901}Mg_{0.009}S_{0.94}$, $Ag_{0.083}Zn_{0.834}Mg_{0.083}S_{0.92}$, $Ag_{0.901}Al_{0.09}Mg_{0.009}S_{0.5945}$, $Ag_{0.834}Al_{0.083}Mg_{0.083}S_{0.6245}$, $Ag_{0.901}Al_{0.09}Mg_{0.009}S_{0.5945}O_{0.2}$, $Ag_{0.901}Al_{0.09}Mg_{0.009}S_{0.5945}Cl_{0.2}$, $Ag_{0.09}Zn_{0.901}Mg_{0.009}S_{0.94}O_{0.2}$, and $Ag_{0.09}Zn_{0.901}Mg_{0.009}S_{0.94}Cl_{0.2}$.

19. An energy storage device comprising a compound of any of the general formulae (1) to (3)

$$A_a S \qquad (1)$$

$$B_b D_{(1-b)} S_y \qquad (2)$$

$$E_e G_g J_{(1-e-g)} M_m S_z \qquad (3)$$

where A is Ag or Au; $0.4 \leq a \leq 5$; B and D are different from each other, and are each selected from the group consisting of Cu, Ag, Au, Zn, Al, W and Li; $0.001 \leq b \leq 0.999$; $0 < y < 2$; E, G and J are different from each other, and are each selected from the group consisting of Cu, Ag, Au, Zn, Al, W, Li and Mg; M is Ca, Sr, Na, K, Rb, O, F, Cl, Br or I; $0.001 < e < 0.999$; $0.001 < g < 0.999$; $0 \leq m \leq 0.2$; and $0 < z < 2(1+m)$,

as an active material of a negative electrode.

20. An electric energy storage device comprising a compound of any of the general formulae (1) to (3)

$$A_a S \qquad (1)$$

$$B_b D_{(1-b)} S_y \qquad (2)$$

$$E_e G_g J_{(1-e-g)} M_m S_z \qquad (3)$$

where A is Ag or Au; $0.4 \leq a \leq 5$; B and D are different from each other, and are each selected from the group consisting of Cu, Ag, Au, Zn, Al, W and Li; $0.001 \leq b \leq 0.999$; $0 < y < 2$; E, G and J are different from each other, and are each selected from the group consisting of Cu, Ag, Au, Zn, Al, W, Li and Mg; M is Ca, Sr, Na, K, Rb, O, F, Cl, Br or I; $0.001 < e < 0.999$; $0.001 < g < 0.999$; $0 \leq m \leq 0.2$; and $0 < z < 2(1+m)$, as an electrode material for an electrochemical capacitor.

**Patentansprüche**

1. Nicht-wässrige Sekundärbatterie, umfassend eine Verbindung der allgemeinen Formel (1)

$$A_aS \qquad (1),$$

   worin A Ag oder Au bedeutet und $0{,}4 \leq a < 5$, als aktives Material einer negativen Elektrode.

2. Nicht-wässrige Sekundärbatterie nach Anspruch 1, wobei es sich bei dem Element A der Verbindung um Ag handelt.

3. Nicht-wässrige Sekundärbatterie nach Anspruch 1, wobei es sich bei dem Element A der Verbindung um Au handelt.

4. Nicht-wässrige Sekundärbatterie nach Anspruch 1, wobei die Verbindung aus der Gruppe $Ag_2S$, $3Ag_2S \cdot Ag_2S_3$, AuS und $AuS_2$ ausgewählt ist.

5. Nicht-wässrige Sekundärbatterie nach einem der Ansprüche 1 bis 4, wobei für die Zahl a der Verbindung die Beziehung $0{,}6 \leq a \leq 2$ gilt.

6. Nicht-wässrige Sekundärbatterie, umfassend eine Verbindung der allgemeinen Formel (2)

$$B_bD_{(1-b)}S_y \qquad (2),$$

   worin B und D voneinander verschieden sind und jeweils aus der Gruppe Cu, Ag, Au, Zn, Al, W und Li ausgewählt sind und $0{,}001 \leq b \leq 0{,}999$ und $0 < y < 2$, als aktives Material einer negativen Elektrode.

7. Nicht-wässrige Sekundärbatterie nach Anspruch 6, wobei es sich bei mindestens einem der Elemente B und D der Verbindung um Cu, Ag oder Au handelt.

8. Nicht-wässrige Sekundärbatterie nach Anspruch 7, wobei es sich bei dem Element B oder D der Verbindung um Ag handelt.

9. Nicht-wässrige Sekundärbatterie nach einem der Ansprüche 6 bis 8, wobei für die Zahl y der Verbindung die Beziehung $0 < y < 1$ gilt.

10. Nicht-wässrige Sekundärbatterie nach Anspruch 6, wobei die Verbindung aus folgender Gruppe ausgewählt ist: $Ag_{0{,}09}Zn_{0{,}91}S_{0{,}95}$, $Ag_{0{,}5}Zn_{0{,}5}S_{0{,}75}$, $Ag_{0{,}9}Al_{0{,}1}S_{0{,}6}$, $Zn_{0{,}91}Cu_{0{,}09}S_{0{,}955}$, $Ag_{0{,}9}Zn_{0{,}1}S_{0{,}55}$, $Li_{0{,}5}Ag_{0{,}5}S_{0{,}25}$, $Li_{0{,}5}Au_{0{,}5}S_{0{,}25}$, $Li_{0{,}5}Cu_{0{,}5}S_{0{,}25}$ und $Li_{0{,}67}Cu_{0{,}33}S_{0{,}67}$.

11. Nicht-wässrige Sekundärbatterie, umfassend eine Verbindung der allgemeinen Formel (3)

$$E_eG_gJ_{(1-e-g)}M_mS_z \qquad (3),$$

   worin E, G und J voneinander verschieden sind und jeweils aus der Gruppe Cu, Ag, Au, Zn, Al, W, Li und Mg ausgewählt sind, M die Bedeutung Ca, Sr, Na, K, Rb, O, F, Cl, Br oder I hat und $0{,}001 < e < 0{,}999$, $0{,}001 < g < 0{,}999$, $0 \leq m \leq 0{,}2$ und $0 < z < 2(1+m)$, als aktives Material einer negativen Elektrode.

**12.** Nicht-wässrige Sekundärbatterie nach Anspruch 11, wobei es sich bei mindestens einem der Elemente E, G und J der Verbindung um Cu, Ag oder Au handelt.

**13.** Nicht-wässrige Sekundärbatterie nach Anspruch 12, wobei es sich bei dem Element E, G oder J der Verbindung um Ag handelt.

**14.** Nicht-wässrige Sekundärbatterie nach einem der Ansprüche 11 bis 13, wobei es sich bei dem Element M der Verbindung um Sr, O, F oder Cl handelt.

**15.** Nicht-wässrige Sekundärbatterie nach Anspruch 14, wobei es sich bei dem Element M der Verbindung um O oder Cl handelt.

**16.** Nicht-wässrige Sekundärbatterie nach einem der Ansprüche 11 bis 15, wobei der Wert der Zahl z der Verbindung der Beziehung $0 < z < 1{,}5 \, (1+m)$ entspricht.

**17.** Nicht-wässrige Sekundärbatterie nach Anspruch 16, wobei der Wert der Zahl z der Verbindung der Beziehung $0{,}2 \, (1+m) < z < (1+m)$ entspricht.

**18.** Nicht-wässrige Sekundärbatterie nach Anspruch 11, wobei die Verbindung aus folgender Gruppe ausgewählt ist:

$Ag_{0,09}Zn_{0,901}Mg_{0,009}S_{0,94}$, $Ag_{0,083}Zn_{0,834}Mg_{0,083}S_{0,92}$,
$Ag_{0,901}Al_{0,09}Mg_{0,009}S_{0,5945}$, $Ag_{0,834}Al_{0,083}Mg_{0,083}S_{0,6245}$,
$Ag_{0,901}Al_{0,09}Mg_{0,009}S_{0,5945}O_{0,2}$,
$Ag_{0,901}Al_{0,09}Mg_{0,009}S_{0,5945}Cl_{0,2}$,
$Ag_{0,09}Zn_{0,901}Mg_{0,009}S_{0,94}O_{0,2}$ und
$Ag_{0,09}Zn_{0,901}Mg_{0,009}S_{0,94}Cl_{0,2}$.

**19.** Energiespeichervorrichtung, umfassend eine Verbindung der allgemeinen Formeln (1) bis (3)

$$A_aS \qquad\qquad (1),$$

$$B_bD_{(1-b)}S_y \qquad\qquad (2),$$

$$E_eG_gJ_{(1-e-g)}M_mS_z \qquad\qquad (3),$$

worin A Ag oder Au bedeutet; $0{,}4 \leq a \leq 5$; B und D voneinander verschieden sind und jeweils aus der Gruppe Cu, Ag, Au, Zn, Al, W und Li ausgewählt sind; $0{,}001 \leq b \leq 0{,}999$; $0 < y < 2$; E, G und J voneinander verschieden sind und jeweils aus der Gruppe Cu, Ag, Au, Zn, Al, W, Li und Mg ausgewählt sind; M die Bedeutung Ca, Sr, Na, K, Rb, O, F, Cl, Br oder I hat; $0{,}001 < e < 0{,}999$; $0{,}001 < g < 0{,}999$; $0 \leq m < 0{,}2$; und $0 < z < 2(1+m)$; als aktives Material einer negativen Elektrode.

**20.** Elektrische Energiespeichervorrichtung, umfassend eine Verbindung einer der Formeln (1) bis (3)

$$A_aS \qquad\qquad (1),$$

$$B_bD_{(1-b)}S_y \qquad\qquad (2),$$

$$E_eG_gJ_{(1-e-g)}M_mS_z \qquad\qquad (3),$$

worin A Ag oder Au bedeutet; $0{,}4 \leq a \leq 5$; B und D voneinander verschieden sind und jeweils aus der Gruppe Cu, Ag, Au, Zn, Al, W und Li ausgewählt sind; $0{,}001 \leq b \leq 0{,}999$; $0 < y < 2$; E, G und J voneinander verschieden sind und jeweils aus der Gruppe Cu, Ag, Au, Zn, Al, W, Li und Mg ausgewählt sind; M die Bedeutung Ca, Sr, Na, K, Rb, O, F, Cl, Br oder I hat; $0,001 < e < 0,999$; $0,001 < g < 0,999$; $0 \leq m \leq 0,2$; und $0 < z < 2(1+m)$; als Elektrodenmaterial für einen elektrochemischen Kondensator.

**Revendications**

1. Pile auxiliaire non aqueuse comprenant un composé de la formule générale (1):

$$A_a S \qquad (1)$$

où A représente Ag ou Au, et $0,4 \leq a \leq 5$,
comme matériau actif d'une électrode négative.

2. Pile auxiliaire non aqueuse selon la revendication 1, dans laquelle l'élément A du composé représente Ag.

3. Pile auxiliaire non aqueuse selon la revendication 1, dans laquelle l'élément A du composé représente Au.

4. Pile auxiliaire non aqueuse selon la revendication 1, dans laquelle le composé est sélectionné dans le groupe formé de $Ag_2S$, $3Ag_2S.Ag_2S_3$, $AuS$, et $AuS_2$.

5. Pile auxiliaire non aqueuse selon l'une quelconque des revendications 1 à 4, dans laquelle le nombre a du composé vaut $0,6 \leq a \leq 2$

6. Pile auxiliaire non aqueuse comprenant un composé de la formule générale (2):

$$B_b D_{(1-b)} S_y \qquad (2)$$

où B et D sont différents l'un de l'autre, et sont chacun sélectionnés dans le groupe formé de Cu, Ag, Au, Zn, Al, W et Li, $0,001 \leq b \leq 0,999$, et $0 < y < 2$,
comme matériau actif d'une électrode négative.

7. Pile auxiliaire non aqueuse selon la revendication 6, dans laquelle au moins l'un des éléments B et D du composé représente Cu, Ag ou Au.

8. Pile auxiliaire non aqueuse selon la revendication 7, dans laquelle l'élément B ou D du composé représente Ag.

9. Pile auxiliaire non aqueuse selon l'une quelconque des revendications 6 à 8, dans laquelle le nombre y du composé vaut $0 < y < 1$.

10. Pile auxiliaire non aqueuse selon la revendication 6, dans laquelle le composé est sélectionné dans le groupe formé de $Ag_{0,09}Zn_{0,91}S_{0,95}$, $Ag_{0,5}Zn_{0,5}S_{0,75}$, $Ag_{0,9}Al_{0,1}S_{0,6}$, $Zn_{0,91}Cu_{0,09}S_{0,955}$, $Ag_{0,9}Zn_{0,1}S_{0,55}$, $Li_{0,5}Ag_{0,5}S_{0,25}$, $Li_{0,5}Au_{0,5}S_{0,25}$, $Li_{0,5}Cu_{0,5}S_{0,25}$, et $Li_{0,67}Cu_{0,33}S_{0,67}$.

11. Pile auxiliaire non aqueuse comprenant un composé de la formule générale (3):

$$E_e G_g J_{(1-e-g)} M_m S_z \qquad (3)$$

où E, G et J sont différents les uns des autres, et sont chacun sélectionnés dans le groupe formé de Cu, Ag, Au, Zn, Al, W, Li et Mg, M représente Ca, Sr, Na, K, Rb, O, F, Cl, Br ou I, $0,001 < e < 0,999$, $0,001 < g < 0,999$, $0 \leq m \leq 0,2$, $0 < z < 2 (1+m)$,
comme matériau actif d'une électrode négative.

12. Pile auxiliaire non aqueuse selon la revendication 11, dans laquelle au moins l'un des éléments E, G et J du composé représente Cu, Ag ou Au.

**13.** Pile auxiliaire non aqueuse selon la revendication 12, dans laquelle l'élément E, G ou J du composé représente Ag.

**14.** Pile auxiliaire non aqueuse selon l'une quelconque des revendications 11 à 13, dans laquelle l'élément M du composé représente Sr, O, F ou Cl.

**15.** Pile auxiliaire non aqueuse selon la revendication 14, dans laquelle l'élément M du composé représente O ou Cl.

**16.** Pile auxiliaire non aqueuse selon l'une quelconque des revendications 11 à 15, dans laquelle le nombre $z$ du composé vaut $0 < z < 1,5(1+m)$.

**17.** Pile auxiliaire non aqueuse selon la revendication 16, dans laquelle le nombre $z$ du composé vaut $0,2 (1+m) < z < (1+m)$.

**18.** Pile auxiliaire non aqueuse selon la revendication 11, dans laquelle le composé est sélectionné dans le groupe formé de

$Ag_{0,09}Zn_{0,901}Mg_{0,009}S_{0,94,}$
$Ag_{0,083}Zn_{0,834}Mg_{0,083}S_{0,92}$, $Ag_{0,901}Al_{0,09}Mg_{0,009}S_{0,5945}$,
$Ag_{0,834}Al_{0,83}Mg_{0,083}S_{0,6245}$, $Ag_{0,901}Al_{0,09}Mg_{0,009}S_{0,5945}O_{0,2}$ ,
$Ag_{0,901}Al_{0,09}Mg_{0,009}S_{0,5945}Cl_{0,2}$, $Ag_{0,09}Zn_{0,901}Mg_{0,009}S_{0,94}O_{0,2}$, et
$Ag_{0,09}Zn_{0,901}Mg_{0,009}S_{0,94}Cl_{0,2}$.

**19.** Dispositif de stockage d'énergie comprenant un composé selon l'une quelconque des formules générales (1) à (3)

$$A_aS \qquad (1)$$

$$B_bD_{(1-b)}S_y \qquad (2)$$

$$E_eG_gJ_{(1-e-g)}M_mS_z \qquad (3)$$

où A représente Ag ou Au ; $0,4 \leq a \leq 5$; B et D sont différents l'un de l'autre, et sont chacun sélectionnés dans le groupe formé de Cu, Ag, Au, Zn, Al, W et Li ; $0,001 \leq b \leq 0,999$ ; et $0 < y < 2$ ; E, G et J sont différents les uns des autres, et sont chacun sélectionnés dans le groupe formé de Cu, Ag, Au, Zn, Al, W, Li et Mg ; M représente Ca, Sr, Na, K, Rb, O, F, Cl, Br ou I ; $0,001 < e < 0,999$ ; $0,001 < g < 0,999$ ; $0 \leq m \leq 0,2$ ; $0 < z < 2(1+m)$, comme matériau actif d'une électrode négative.

**20.** Dispositif de stockage d'énergie électrique comprenant un composé selon l'une quelconque des formules générales (1) à (3)

$$A_aS \qquad (1)$$

$$B_bD_{(1-b)}S_y \qquad (2)$$

$$E_eG_gJ_{(1-e-g)}M_mS_z \qquad (3)$$

où A représente Ag ou Au ; $0,4 \leq a \leq 5$; B et D sont différents l'un de l'autre, et sont chacun sélectionnés dans le groupe formé de Cu, Ag, Au, Zn, Al, W et Li ; $0,001 \leq b \leq 0,999$ ; et $0 < y < 2$ ; E, G et J sont différents les uns des autres, et sont chacun sélectionnés dans le groupe formé de Cu, Ag, Au, Zn, Al, W, Li et Mg ; M représente Ca, Sr, Na, K, Rb, O, F, Cl, Br ou I ; $0,001 < e < 0,999$ ; $0,001 < g < 0,999$ ; $0 \leq m \leq 0,2$; $0 < z < 2(1+m)$,

comme matériau d'électrode pour un condensateur électrochimique.

# FIG. 1

# FIG. 2

CAPACITY (mAh/cc)

POTENTIAL (V)

CAPACITY (mAh/g)

FIG. 3

CAPACITY (mAh/cc)